# FASCICULE DE BREVET EUROPEEN

(11) **EP 3 277 543 B1**
(45) Date de publication et mention de la délivrance du brevet: **03.04.2019**
(21) Numéro de dépôt: 16707918.5
(22) Date de dépôt: 12.02.2016
(51) Int. Cl.: B60R 19/12, B60R 19/30, B60R 19/34

(54) **STRUCTURE DE VÉHICULE ALLÉGÉE COMPORTANT DEUX VOIES D'EFFORTS ET VÉHICULE COMPORTANT UNE TELLE STRUCTURE**
FAHRZEUG MIT LEICHTBAUSTRUKTUR MIT ZWEI BLASTUNGSWEGE
VEHICLE WITH LIGHTENED STRUCTURE HAVING TWO WAYS OF IMPACT

(30) Priorité: 30.03.2015 FR 1552681
(43) Date de publication de la demande: 07.02.2018
(73) Titulaire: PSA AUTOMOBILES S.A., 78300 Poissy (FR)
(72) Inventeur: PERU, Marc, 92290 Chatenay Malabry (FR)
(86) Numéro de dépôt international: PCT/FR2016/050331
(87) Numéro de publication internationale: WO 2016/156685

(56) Documents cités:
- EP-A1- 1 604 869
- DE-A1- 10 100 875
- DE-A1-102013 207 236
- FR-A3- 2 930 755

## Description

La présente invention concerne une structure de véhicule qui comporte un premier élément de renfort, un second élément de renfort et un élément de liaison, le premier élément de renfort étant adapté pour amortir une partie principale des efforts dus à un choc appliqué à une première extrémité, suivant une direction principale de travail, formant une voie principale d'effort, le second élément de renfort étant adapté pour amortir une seconde partie des efforts dus au choc appliqué à une première extrémité, formant une voie d'effort secondaire et des premiers moyens de fixation relient l'élément de liaison au second élément de renfort.

Un exemple de réalisation d'une telle structure de véhicule connue est divulgué dans le document FR2896222 et est représenté sur la figure 1 et sur la figure 2.

Le document DE10100875 A1 divulgue une structure de véhicule d'après le préambule de la revendication 1.

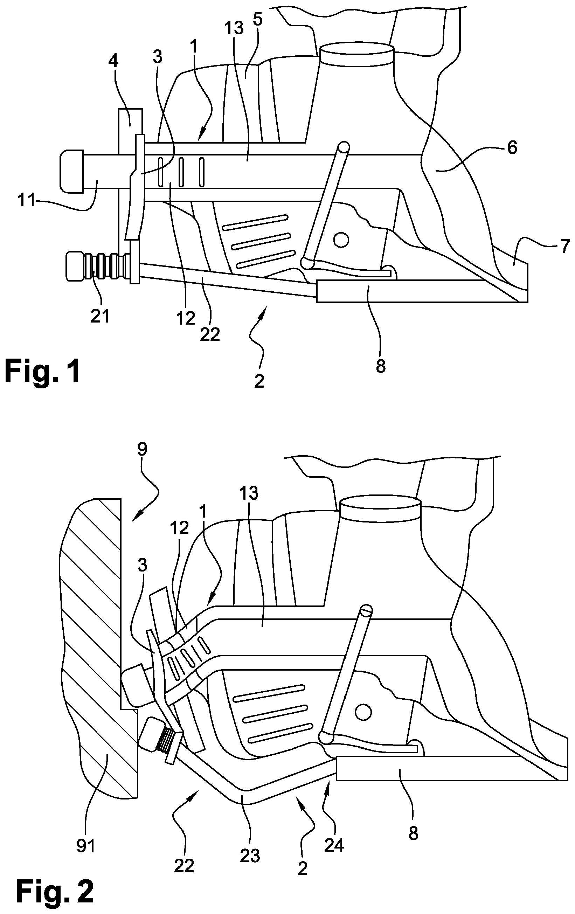

La figure 1 représente une vue partielle de la partie avant de la structure d'un véhicule tel que connu de l'état de la technique. La structure avant comporte un premier élément de renfort 1 et un second élément de renfort 2. La structure avant comporte une traverse avant 3 positionnée juste en arrière de la peau de pare-chocs avant (la peau de pare-chocs n'est pas représentée) et qui forme un support pour un radiateur 4. La traverse avant 3 forme aussi un élément de liaison rigide entre le premier élément de renfort 1 et le second élément de renfort 2. Le premier élément de renfort 1 forme une voie principale d'effort pour amortir et transmettre à une autre partie de la structure du véhicule une première partie de l'énergie résultante d'un choc sur l'avant du véhicule. Le premier élément de renfort 1 s'étend principalement suivant une direction principale de travail correspondant à la direction de déplacement du véhicule lors du choc avant. Le second élément de renfort 2 forme une voie d'effort secondaire pour amortir et transmettre une seconde partie de l'énergie résultante du choc selon la même direction principal de travail. Le second élément de renfort 2 s'étend principalement suivant la direction principale de travail, parallèlement au premier élément de renfort 1. Le premier élément de renfort 1 comporte une première partie 11, positionnée le plus en avant du véhicule, qui est adaptée pour amortir l'énergie résultante du choc en se compressant au maximum une fois un premier niveau d'effort appliqué sur l'avant du véhicule. La première partie 11 du premier élément de renfort 1 est généralement appelé « crash box ». Le premier élément de renfort 1 comporte, dans le prolongement de la première partie 11, une deuxième partie 12 qui est adaptée pour se déformer une fois un second niveau d'effort appliqué sur l'avant du véhicule. Le premier élément de renfort 1 comporte dans le prolongement de la deuxième partie 12, une troisième partie 13 qui est adaptée pour, une fois les deux seuils d'efforts dépassés, transmettre l'excédent d'énergie à amortir au reste de la structure du véhicule. La troisième partie 13 du premier élément de renfort 1 forme aussi une partie du berceau du moteur 5 et est en particulier couramment appelé longeronnet. Le moteur 5 est essentiellement positionné entre les deux longeronnets 13. La partie arrière des longeronnets 13 est solidarisée sur un tablier 6, qui forme une séparation entre l'habitacle du véhicule et le compartiment du moteur 5. Au-delà du tablier 6, les longeronnets 13 sont prolongés par les longerons 7 qui servent à rigidifier la structure centrale du véhicule. La première partie 11 et la deuxième partie 12 du premier élément de renfort 1 sont dimensionnées pour que sur un choc basse vitesse, seule la première partie 11 soit déformée. La première partie 11 du premier élément de renfort 1 est simple à remplacer, permettant de limiter les pièces à remplacer lors d'un tel choc à basse vitesse. Le second élément de renfort 2 comporte une première partie 21, positionnée en dessous du premier élément de renfort 1, qui est adaptée pour s'écraser sensiblement au même moment que la première partie 11 du premier élément de renfort 1, constituant une « crash box » inférieure. Le second élément de renfort 2 comporte, dans le prolongement de la première partie 21, une seconde partie 22 linéaire destinée à absorber une partie de l'énergie résultante du choc par une flexion de sa partie centrale 23. Une telle flexion de la partie centrale 23 correspond à un flambage de la seconde partie 22 du second élément de renfort 2. L'extrémité arrière de la seconde partie 22 du second élément de renfort 2 est solidarisée sur une partie du train avant du véhicule qui forme le berceau inférieur de suspension 8. Dans le cas d'un choc basse vitesse, les deux parties du second élément de renfort 2 peuvent être déformées, mais une telle déformation est là pour protéger le berceau inférieur 8 qui ne sera pas abimé lors d'un tel choc basse vitesse. Comme le second élément de renfort 2 n'a pas de rôle structurel pour l'avant du véhicule, il peut être facilement remplacé.

La figure 2 représente la partie avant de la structure du véhicule après un choc tel que réalisé par l'organisme « European New car Assessment Program » plus connu sous l'abréviation « Euro NCAP », qui consiste à impacter un véhicule lancé à 64 km/h contre une paroi 9 qui présente la particularité d'avoir une excroissance 91 en partie basse. Pour un véhicule du type « SUV », acronyme de « Sport Utility Vehicle », comprenant généralement une structure rehaussée par rapport à un véhicule automobile de type berline, la partie en excroissance 91 de la paroi 9 est uniquement en regard du second élément de renfort 2. Du fait de ce décalage, le second élément de renfort 2 subit des contraintes supérieures au premier élément de renfort 1, faisant que la partie centrale 23 de la seconde partie 22 du second élément de renfort 2, risque de se plier lors d'un tel choc au-delà de sa limite de résistance. La partie centrale 23 du second élément de renfort présente alors une déformation plastique, faisant que le second élément de renfort 2 ne présente plus de résistance au flambage lors du choc. L'amplitude de la déformation de la seconde partie 22 du second élément 2 risque alors de créer une rupture d'une articulation 24 qui relie le second élément de renfort 2 au berceau inférieur 8. Le second élément de renfort 2 entraîne aussi vers le bas la traverse avant 3 et par suite, l'extrémité avant de la seconde partie 12 du premier élément de renfort 1. Le décalage vers le bas de l'extrémité avant de la seconde partie 12 du premier élément de renfort 1 crée un fort décalage angulaire entre la seconde partie 12 et la troisième partie 13 du premier élément de renfort 1. Un tel décalage angulaire réduit considérablement la résistance lors du choc du premier élément de renfort 1.

Un des buts de l'invention est donc de remédier au moins partiellement aux inconvénients de l'art antérieur et de proposer une structure de véhicule qui comporte un premier élément de renfort et un tel second élément de renfort et qui est adaptée pour, lors d'un choc contre une paroi présentant une telle dissymétrie, conserver un bon alignement structurel aux premier et second éléments de renfort. Une telle conservation de cet alignement structurel permettant de mieux amortir l'énergie due au choc. Une telle structure renforcée devant aussi pouvoir mieux répondre aux contraintes du choc basse vitesse en limitant le nombre de pièces à remplacer et doit aussi contribuer à la réduction de la masse du véhicule.

Elle propose notamment, à cet effet, une structure de véhicule qui comporte un premier élément de renfort, un second élément de renfort et un élément de liaison, le premier élément de renfort étant adapté pour amortir une partie principale des efforts dus à un choc appliqué à une première extrémité, suivant une direction principale de travail, formant une voie principale d'effort, le second élément de renfort étant adapté pour amortir une seconde partie des efforts dus au choc appliqué à une première extrémité, formant une voie d'effort secondaire et des premiers moyens de fixation relient l'élément de liaison au second élément de renfort, telle que les premiers moyens de fixation sont adaptés pour permettre un libre coulissement, selon la direction principale de travail, de la première extrémité du second élément de renfort lors du choc, où les premiers moyens de fixation comportent un palier solidaire de l'élément de liaison, traversé par le second élément de renfort et en ce qu'une partie des premiers moyens de fixation comportent une partie intermédiaire en élastomère interposée entre ledit palier et le second élément de renfort.

Selon une deuxième caractéristique de l'invention, une seconde extrémité du second élément de renfort est reliée à une partie de la structure du véhicule par des seconds moyens de fixation, les seconds moyens de fixation comportant au moins une partie intermédiaire en élastomère interposée entre la seconde extrémité et ladite partie de la structure du véhicule.

Selon une troisième caractéristique de l'invention, le second élément de renfort comporte au moins une partie élastiquement déformable et en ce que la partie élastiquement déformable du second élément de renfort se prolonge au moins des premiers moyens de fixation jusqu'au seconds moyens de fixation. La partie élastiquement déformable du second élément de renfort présente, lors du choc sur la première extrémité du second élément de renfort, une flexion simple entre les premiers moyens de fixation et les seconds moyens de fixation, la partie élastiquement déformable étant adaptée pour avoir un retour élastique dans sa position initiale après ledit choc pour une flexion présentant une flèche pouvant aller jusqu'à 50mm. En fonction de la longueur de la partie élastiquement déformable du second élément de renfort, la flèche peut aller jusqu'à 80mm tout en permettant un retour élastique du second élément de renfort. Une telle longueur de la partie élastiquement déformable du second élément de renfort est généralement comprise entre 400mm et 600mm.

Selon une quatrième caractéristique de l'invention, la partie élastiquement déformable est formée par une prolonge en matériaux composites. La prolonge en matériaux composites comporte au moins une âme métallique ou une âme composée d'un matériau fibreux tel que de la fibre de verre ou de carbone, ladite âme étant recouverte d'une résine. L'âme se présente généralement sous une forme tubulaire, mais peut aussi se présenter sous la forme d'une lame, une telle lame pouvant comporter des ouvertures permettant le passage de la résine.

La présente invention concerne aussi un véhicule qui comporte une structure comportant au moins une des revendications précédentes, qui est destinée à former la partie avant ou la partie arrière de la structure du véhicule.

D'autres caractéristiques et avantages de l'invention apparaîtront plus clairement à la lecture de la description suivante, donnée à titre d'exemple illustratif et non limitatif, et des dessins annexés parmi lesquels :
- La figure 1, déjà décrite, représente une vue partielle de la partie avant de la structure d'un véhicule tel que connu de l'état de la technique ;
- La figure 2, déjà décrite, représente une vue partielle de la partie avant de la structure du véhicule tel que connu de l'état de la technique, après un choc avant contre une paroi dissymétrique, présentant une excroissance en partie inférieur ;
- La figure 3 représente une vue partielle de la partie avant de la structure d'un véhicule selon l'invention ;
- La figure 4 représente une vue partielle de la partie avant de la structure du véhicule selon l'invention, lors d'un choc avant dit de réparabilité ;
- La figure 5 représente une vue partielle de la partie avant de la structure du véhicule selon l'invention, lors d'un choc avant grande vitesse contre une paroi de type dissymétrique ;
- Les figures 6 à 8 représentent un premier mode de réalisation de l'invention où le second élément de renfort est principalement formé d'une seule pièce en matériaux composites ; et
- Les figures 9 et 10 représentent deux autres exemples de mode de réalisation de la partie en matériaux composites du second élément de renfort.

Les figures 1 et 2 ont déjà été décrites en partie introductive. Les parties communes entre la structure du véhicule selon l'état de la technique et selon l'invention conservent les mêmes références.

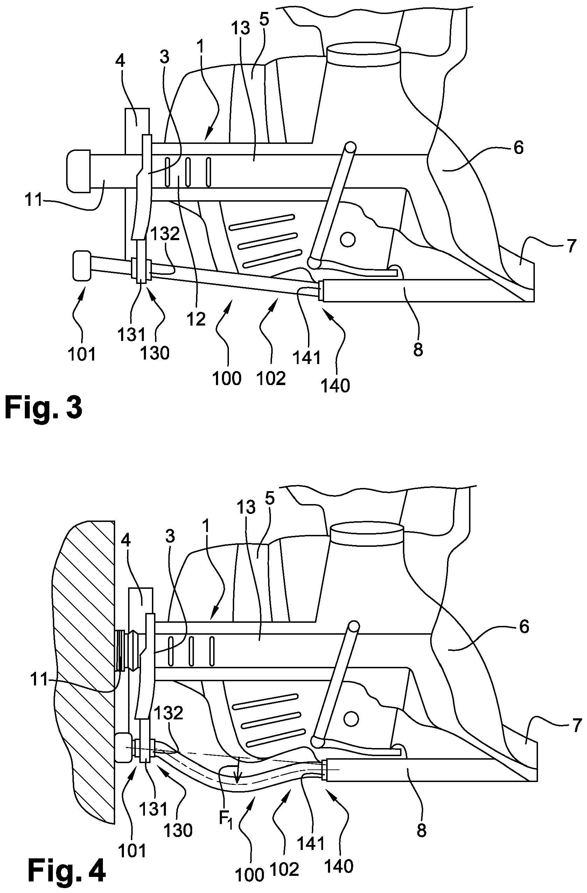

La figure 3 représente une vue partielle de la partie avant de la structure d'un véhicule selon l'invention. La structure avant comporte le premier élément de renfort 1 tel que précédemment décrit et un second élément de renforts 100 selon l'invention. La structure avant comporte une traverse avant 3 positionnée juste en arrière de la peau de pare-chocs avant (la peau de pare-chocs n'est pas représentée) et qui forme un support pour le radiateur 4. La traverse avant 3 forme aussi un élément de liaison rigide entre le premier élément de renfort 1 et le second élément de renfort 100. Tel que précédemment décrit, le premier élément de renfort 1 forme une voie principale d'effort pour amortir et transmettre une première partie de l'énergie résultante d'un choc sur l'avant du véhicule. Le premier élément de renfort 1 s'étend principalement suivant une direction principale de travail correspondant à la direction de déplacement du véhicule lors du choc avant. Le premier élément de renfort 1 comporte toujours une première partie 11, généralement appelé «crash box », une seconde partie 12 et une troisième partie 13 qui forme aussi une partie du berceau du moteur 5 et est en particulier couramment appelé longeronnet. Le moteur 5 est essentiellement positionné entre les deux longeronnets 13. La partie arrière des longeronnets 13 est solidarisée sur un tablier 6, qui forme une séparation entre l'habitacle du véhicule et le compartiment du moteur 5. Au-delà du tablier 6, les longeronnets 13 sont prolongés par les longerons 7 qui servent à rigidifier la structure centrale du véhicule. Selon l'invention, le second élément de renfort 100 forme une voie d'effort secondaire pour amortir et transmettre une seconde partie de l'énergie résultante du choc selon la même direction principal de travail. Le second élément de renfort 100 s'étend principalement suivant la direction principale de travail, parallèlement au premier élément de renfort 1. La traverse avant 3 est reliée au second élément de renfort 100 par des premiers moyens de fixation 130. Les premiers moyens de fixation 130 sont adaptés pour permettre un libre coulissement, selon la direction principale de travail, de la partie avant 101 du second élément de renfort 100. Les premiers moyens de fixation 130 comportent un palier 131 solidaire de la traverse avant 3, qui enserre la partie avant 101 du second élément de renfort 100. Les premiers moyens de fixation 130 comportent une partie intermédiaire en élastomère 132 destiné à être interposée entre le palier 131 et la partie avant 101 du second élément de renfort 100. La partie intermédiaire en élastomère 132 permet de compenser les variations d'alignement de la partie avant 101 du second élément de renfort 100 lors du choc et de filtrer les vibrations qui peuvent se circuler entre les différentes parties de la structure avant du véhicule. L'extrémité arrière 102 du second élément de renfort 100 est reliée à la partie avant du berceau inférieur de suspension 8 par des seconds moyens de fixation 140. Les seconds moyens de fixation 140 comportent au moins une partie intermédiaire en élastomère 141 destinés à être interposée entre la seconde extrémité 102 du second élément de renfort 100 et la partie avant du berceau inférieur de suspension 8. La partie intermédiaire en élastomère 141 des seconds moyens de fixation 140 permet de compenser les variations d'alignement de l'extrémité arrière 102 du second élément de renfort 100 lors choc et de filtrer les vibrations qui peuvent se circuler entre les différentes parties de la structure avant du véhicule.

La figure 4 représente une vue partielle de la partie avant de la structure du véhicule selon l'invention, lors d'un choc avant dit de réparabilité. Un tel choc avant dit de réparabilité correspond à un choc qui résulte d'une faible vitesse d'impact du véhicule contre un obstacle, de l'ordre d'une dizaine de km/h. Un tel choc dit de réparabilité implique que le véhicule puisse être remis en état à moindre frais après le choc. Sous l'effet de l'impact, la partie avant 101 du second élément de renfort 100 coulisse le long du palier 131 des premiers moyens de fixation 130. Entre les premiers moyens de fixation 130 et les second moyens de fixation 140, le second élément de renfort 100 présente une flexion de forme simple (une seule ondulation) avec un fléchissement qui présente une valeur de flèche F1 qui n'excède pas les 80mm. Ainsi, selon l'invention, le second élément de renfort 100 comporte au moins une partie, positionnée entre les premiers moyens de fixation 130 et les seconds moyens de liaison 140, qui présente une structure adaptée pour être élastiquement déformable. Cette partie élastiquement déformable doit permettre d'atteindre la valeur de la flèche F1 tout en ayant un retour élastique du second élément de renfort 100 après le choc, sans que celui-ci ne soit détérioré. Dans l'exemple tel que présenté, l'ensemble du second élément de renfort 100 est réalisé en matériaux composites qui permettent une telle déformation élastique. Les seconds moyens de fixation 140, du fait de la présence de la partie intermédiaire en élastomère 141, suivent le fléchissement du second élément de renfort 100 sans être dégradés. Il en est de même des premiers moyens de fixation 130 où la partie intermédiaire en élastomère 132 permet de suivre le fléchissement du second élément de renfort 100 sans être dégradée. Seule la première partie 11 du premier élément de renfort 1 est dégradée lors d'un tel choc basse vitesse et sera remplacée après le choc.

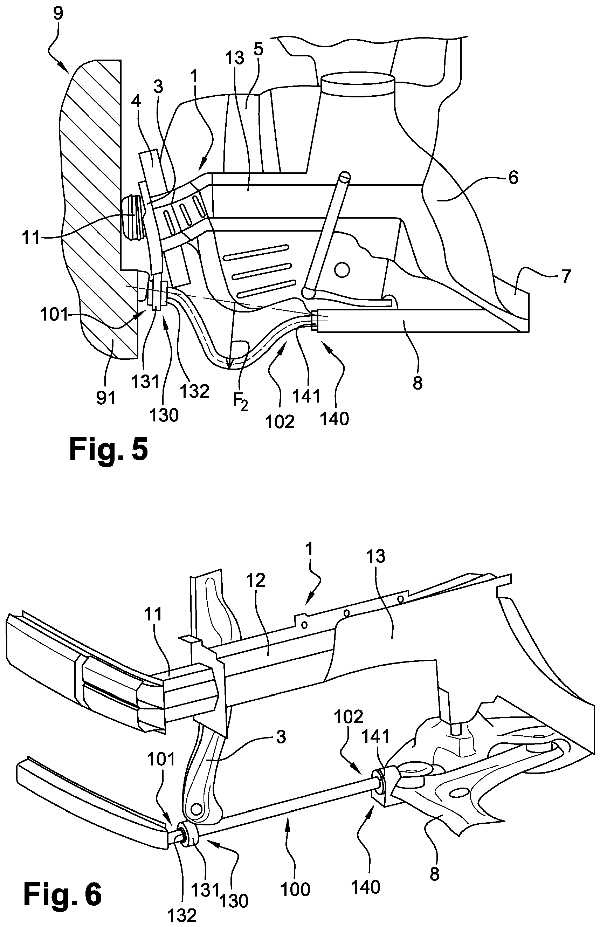

La figure 5 représente une vue partielle de la partie avant de la structure du véhicule selon l'invention, lors d'un choc avant grande vitesse contre une paroi 9 de type dissymétrique, présentant une excroissance 91 en partie basse. Une telle paroi 9 dissymétrique correspond à un des essais de choc avant pratiqué par l'organisme « Euro NCAP », tel qu'explicité précédemment en figure 2. Le second élément de renfort 100, qui est toujours davantage sollicité du fait de la présence de la partie en excroissance 91, présente comme précédemment, une flexion de forme simple (une seule ondulation) avec un fléchissement qui présente une valeur de flèche F2 qui excède pour un tel choc grande vitesse les 80mm. Une telle valeur de flèche F2 ne permet plus un retour élastique du second élément de renfort 100. La structure en matériaux composites du second élément de renfort 100 présente une déformation plastique. Mais, contrairement à une structure entièrement métallique, le second élément de renfort 100 continue à opposer une force de résistance suffisante pour limiter le basculement vers l'avant de la traverse avant 3, permettant de maintenir sensiblement alignée la deuxième partie 12 et la troisième partie 13 du premier élément de renfort 1, lui conservant toutes ces capacités de résistance au choc.

Les figures 6 à 8 représentent un premier mode de réalisation de l'invention où le second élément de renfort 100 est principalement formé d'une seule pièce en matériaux composites. Une telle pièce en matériaux composition pouvant être formée d'un tube creux dont la structure latérale est formée par une fibre tissée en carbone imprégnée de résine. Un tel tube pouvant présenter un diamètre de 40mm pour une épaisseur de 10mm.

La figure 6 représente une vue partielle en perspective de la structure avant du véhicule selon le premier mode de réalisation. La structure avant comporte toujours un premier élément de renfort 1, un second élément de renfort 100 et une traverse avant 3 qui relie, en partie avant, le premier élément de renfort 1 au second élément de renfort 100. Le premier élément de renfort 1, tel que connu de l'état de la technique, comporte une première partie 11 qui constitue une « crash box », une seconde partie 12 et un longeronnet 13. Le second élément de renfort 100 comporte une partie principale cylindrique en matériaux composites dont la première partie 101 se prolonge au-delà des premiers moyens de fixation 130. La partie en avant des premiers moyens de fixation 130 remplace la « crash box » inférieure telle que décrite sur la figure 1. Tel que précédemment décrit, les premiers moyens de fixation 130 comportent un palier 131 et une partie intermédiaire en élastomère 132. La partie arrière 102 du second élément de renfort 100 et la partie avant du berceau 8 comportent, tels que décrits précédemment, des seconds moyens de fixation 140. Les seconds moyens de fixation 140 comportent toujours une partie intermédiaire en élastomère 141. La structure avant, selon ce premier mode de réalisation, présente à la fois comme avantage d'être plus légère qu'une structure avant selon l'état de la technique du fait du remplacement de la « crash box » inférieure et de la partie principale en métal par la partie principale cylindrique en matériaux composites. La partie principale cylindrique en matériaux composites présente en outre une meilleure élasticité que le métal, lui permettant de se déformer de manière élastique lors d'un choc réparabilité sans être endommagée et de conserver un comportement plus constant lors d'un choc haute vitesse.

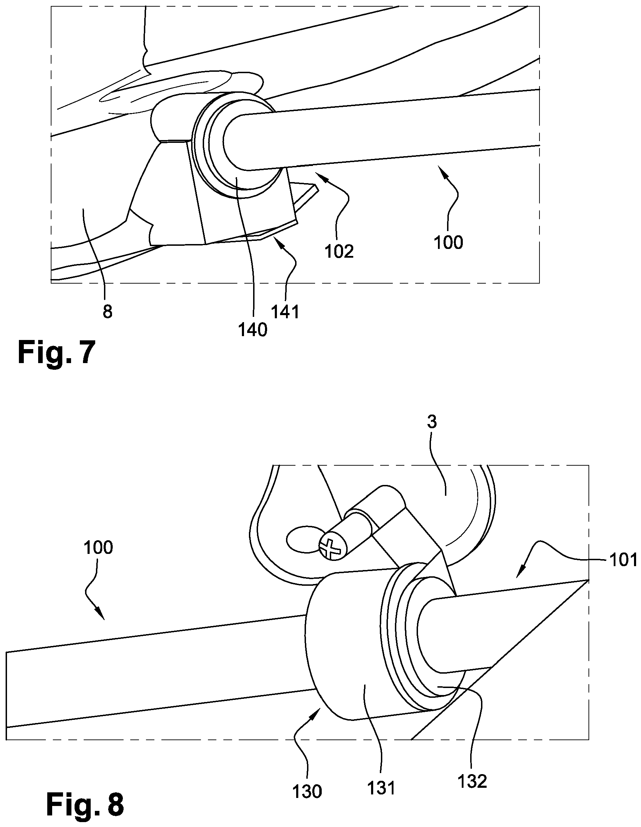

La figure 7 représente une vue de détails, en perspective, des seconds moyens de fixation 140 qui permettent de solidariser la partie arrière 102 du second élément de renfort 100 au berceau 8. Sur cette figure est plus particulièrement visible la partie intermédiaire en élastomère 141.

La figure 8 représente une vue de détails, en perspective, des premiers moyens de fixation 130 qui permettent de solidariser la partie avant 101 du second élément de renfort 100 à la traverse avant 3. Sur cette figure est plus particulièrement visible la partie intermédiaire en élastomère 132 et le palier 131.

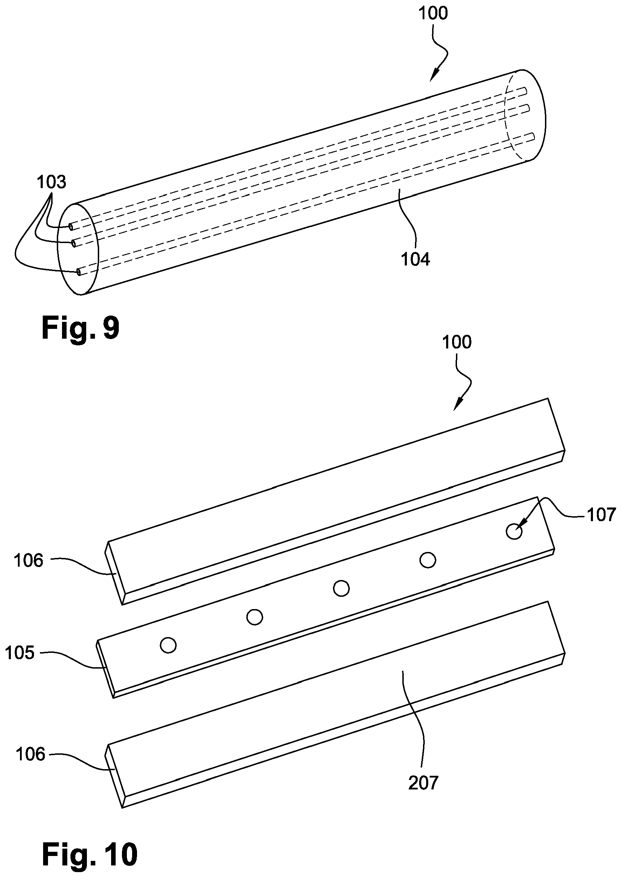

Les figures 9 et 10 représentent deux autres exemples de mode de réalisation de la partie en matériaux composites du second élément de renfort 100.

Sur la figure 9 la partie en matériaux composites du second élément de renfort 100 comporte des fibres de carbone 103 qui sont moulées dans une matrice en résine 104.

Sur la figure 10 la partie en matériaux composites du second élément de renfort 100 comporte une mince lame métallique 105, d'une épaisseur de l'ordre de 1mm, recouverte de parte et d'autre par deux couches de résine 106 de plus grande épaisseur, de l'ordre de 5mm. Des ouvertures 107 formées dans la lame métallique 105 permettent une bonne cohésion entre la lame métallique 105 et les deux couches de résine 106.

L'avantage d'avoir à la fois une partie métallique et de la résine réside dans le fait d'avoir un second élément de renfort 100 qui se plie sans se casser, avec une élasticité améliorée, avec une masse inférieure à un second élément de renfort 100 entièrement réalisé en métal. La partie en matériaux composites du second élément de renfort 100 peut indifféremment présenter une section circulaire, carré ou rectangulaire.

Une telle structure pouvant former la partie avant ou la partie arrière d'un véhicule.

## Revendications

1. Structure de véhicule comportant un premier élément de renfort (1), un second élément de renfort (100) et un élément de liaison (3), le premier élément de renfort (1) étant adapté pour amortir une partie principale des efforts dus à un choc appliqué à une première extrémité, suivant une direction principale de travail, formant une voie principale d'effort, le second élément de renfort (100) étant adapté pour amortir une seconde partie des efforts dus au choc appliqué à une première extrémité (101), formant une voie d'effort secondaire et des premiers moyens de fixation (130) relient l'élément de liaison (3) au second élément de renfort (100), les premiers moyens de fixation (130) étant adaptés pour permettre un libre coulissement, selon la direction principale de travail, de la première extrémité (101) du second élément de renfort (100) lors dudit choc, **caractérisée en ce que** les premiers moyens de fixation (130) comportent un palier (131) solidaire de l'élément de liaison (3), traversé par le second élément de renfort (100) et **en ce qu'**une partie des premiers moyens de fixation (130) comportent une partie intermédiaire en élastomère (132) interposée entre ledit palier (131) et le second élément de renfort (100).

2. Structure de véhicule selon la revendication 1, **caractérisée en ce qu'**une seconde extrémité (102) du second élément de renfort (100) est reliée à une partie de la structure du véhicule (8) par des seconds moyens de fixation (140), les seconds moyens de fixation (140) comportant au moins une partie intermédiaire en élastomère interposée entre la seconde extrémité (102) et ladite partie de la structure du véhicule (8).

3. Structure de véhicule selon la revendication 2, **caractérisée en ce que** le second élément de renfort (100) comporte au moins une partie élastiquement déformable et **en ce que** la partie élastiquement déformable du second élément de renfort (100) se prolonge au moins des premiers moyens de fixation (130) jusqu'au seconds moyens de fixation (140).

4. Structure de véhicule selon la revendication 3, **caractérisée en ce que** la partie élastiquement déformable du second élément de renfort (100) présente, lors du choc sur la première extrémité (101) du second élément de renfort (100), une flexion simple entre les premiers moyens de fixation (130) et les seconds moyens de fixation (140), la partie élastiquement déformable étant adaptée pour avoir un retour élastique dans sa position initiale après ledit choc pour une flexion présentant une flèche pouvant aller jusqu'à 50mm.

5. Structure de véhicule selon la revendication 4, **caractérisée en ce que** ladite flèche peut aller jusqu'à 80mm tout en permettant un retour élastique du second élément de renfort (100).

6. Structure de véhicule selon l'une quelconque des revendications 3 à 5, **caractérisée en ce que** la partie élastiquement déformable est formée par une prolonge en matériaux composites.

7. Structure de véhicule selon la revendication 6, **caractérisé en ce que** la prolonge en matériaux composites comporte au moins une âme métallique (105) ou une âme (103) composée d'un matériau fibreux tel que de la fibre de verre ou de carbone, ladite âme étant recouverte d'une résine (106, 104).

8. Structure de véhicule selon la revendication 7, **caractérisé en ce que** l'âme (105) est formée par une lame, ladite lame pouvant comporter des ouvertures (107) permettant le passage de la résine (106).

9. Véhicule comportant une structure selon l'une quelconque des revendications précédentes, destinée à former la partie avant ou la partie arrière de la structure du véhicule.

## Patentansprüche

1. Fahrzeugstruktur, die ein erstes Verstärkungselement (1), ein zweites Verstärkungselement (100) und ein Verbindungselement (3) umfasst, wobei das erste Verstärkungselement (1) angepasst ist, um einen Hauptteil der Kräfte zu dämpfen, die auf einen Stoß zurückzuführen sind, der an einem ersten Ende angewandt wird, entlang einer Arbeitshauptrichtung, die einen Hauptkraftweg bildet, wobei das zweite Verstärkungselement (100) angepasst ist, um einen zweiten Teil der Kräfte, die auf den Stoß zurückzuführen sind, der an einem ersten Ende (101) angelegt wird, zu dämpfen, der einen zweiten Kraftweg bildet, und erste Befestigungsmittel (130) das Verbindungselement (3) mit dem zweiten Verstärkungselement (100) verbinden, wobei die ersten Befestigungsmittel (130) angepasst sind, um ein freies Gleiten entlang der Arbeitshauptrichtung des ersten Endes (101) des zweiten Verstärkungselements (100) bei dem Stoß zu ermöglichen, **dadurch gekennzeichnet, dass** die ersten Befestigungsmittel (130) ein Lager (131) umfassen, das fest mit dem Verbindungselement (3) verbunden ist, das von dem zweiten Verstärkungselement (100) durchquert ist, und dass ein Teil der ersten Befestigungsmittel (130) einen Zwischenteil aus Elastomer (132) umfasst, der zwischen das erste Lager (131) und das zweite Verstärkungselement (100) eingefügt ist.

2. Fahrzeugstruktur nach Anspruch 1, **dadurch gekennzeichnet, dass** ein zweites Ende (102) des zweiten Verstärkungselements (100) mit einem Teil der Struktur des Fahrzeugs (8) durch zweite Befestigungsmittel (140) verbunden ist, wobei die zweiten Befestigungsmittel (140) mindestens einen Zwischenteil aus Elastomer umfassen, der zwischen das zweite Ende (102) und den Teil der Struktur des Fahrzeugs (8) eingefügt ist.

3. Fahrzeugstruktur nach Anspruch 2, **dadurch gekennzeichnet, dass** das zweite Verstärkungselement (100) mindestens einen elastisch verformbaren Teil umfasst, und dass sich der elastisch verformbare Teil des zweiten Verstärkungselements (100) mindestens von den ersten Befestigungsmitteln (130) bis zu den zweiten Befestigungsmitteln (140) verlängert.

4. Fahrzeugstruktur nach Anspruch 3, **dadurch gekennzeichnet, dass** der elastisch verformbare Teil des zweiten Verstärkungselements (100) bei dem Stoß auf das erste Ende (101) des zweiten Verstärkungselements (100) eine einfache Biegung zwischen den ersten Befestigungselementen (130) und den zweiten Befestigungselementen (140) aufweist, wobei der elastisch verformbare Teil angepasst ist, um eine elastische Rückkehr in seine anfängliche Position nach dem Stoß für eine Biegung, die einen Durchhang, der bis zu 50 mm betragen kann, aufzuweisen.

5. Fahrzeugstruktur nach Anspruch 4, **dadurch gekennzeichnet, dass** der Durchhang bis zu 80 mm betragen kann, während er gleichzeitig eine elastische Rückkehr des zweiten Verstärkungselements (100) erlaubt.

6. Fahrzeugstruktur nach einem der Ansprüche 3 bis 5, **dadurch gekennzeichnet, dass** der elastisch verformbare Teil aus einer Verlängerung aus Verbundwerkstoffen gebildet ist.

7. Fahrzeugstruktur nach Anspruch 6, **dadurch gekennzeichnet, dass** die Verlängerung aus Verbundwerkstoffen mindestens eine metallische Seele (105) oder eine Seele (103) umfasst, die aus einem faserigen Werkstoff, wie Glasfaser oder Carbon besteht, wobei die Seele mit einem Harz (106, 104) bedeckt ist.

8. Fahrzeugstruktur nach Anspruch 7, **dadurch gekennzeichnet, dass** die Seele (105) aus einer Klinge gebildet ist, wobei die Klinge Öffnungen (107) umfassen kann, die das Durchgehen des Harzes (106) erlauben.

9. Fahrzeug, das eine Struktur nach einem der vorstehenden Ansprüche umfasst, die dazu bestimmt ist, den vorderen Teil oder den hinteren Teil der Struktur des Fahrzeugs zu bilden.

## Claims

1. A vehicle structure comprising a first reinforcing element (1), a second reinforcing element (100) and a connecting element (3), the first reinforcing element (1) being suitable for absorbing a major portion of the impacts due to an a shock applied to a first end, along a main working direction, forming a main impact path, the second reinforcing element (100) being suitable for absorbing a second portion of the impacts due to the shock applied to a first end (101), forming a secondary impact path, and first attachment means (130) connect the connecting element (3) to the second reinforcing element (100), the first attachment means (130) being suitable for permitting a free sliding, along the main working direction, of the first end (101) of the second reinforcing element (100) during said shock, **characterized in that** the first attachment means (130) comprise a bearing (131) integral with the connecting element (3), passed through by the second reinforcing element (100), and **in that** a portion of the first attachment means (130) comprise an intermediate part (132) made of elastomer, interposed between said bearing (131) and the second reinforcing element (100).

2. The vehicle structure according to Claim 1, **characterized in that** a second end (102) of the second reinforcing element (100) is connected to a part of the structure of the vehicle (8) by second attachment means (140), the second attachment means (140) comprising at least one intermediate part made of elastomer, interposed between the second end (102) and said part of the structure of the vehicle (8).

3. The vehicle structure according to Claim 2, **characterized in that** the second reinforcing element (100) comprises at least one elastically deformable part and **in that** the elastically deformable part of the second reinforcing element (100) extends at least from the first attachment means (130) to the second attachment means (140).

4. The vehicle structure according to Claim 3, **characterized in that** the elastically deformable part of the second reinforcing element (100) presents, during the shock on the first end (101) of the second reinforcing element (100), a simple flexion between the first attachment means (130) and the second attachment means (140), the elastically deformable part being suited for having an elastic return in its initial position after said shock for a flexion presenting a deflection able to reach up to 50 mm.

5. The vehicle structure according to Claim 4, **characterized in that** said deflection can reach up to 80 mm whilst permitting an elastic return of the second reinforcing element (100).

6. The vehicle structure according to any one of Claims 3 to 5, **characterized in that** the elastically deformable part is formed by an extension made of composite materials.

7. The vehicle structure according to Claim 6, **characterized in that** the extension made of composite materials comprises at least one metal core (105) or a core (103) composed of a fibrous material such as glass fibre or carbon fibre, said core being covered by a resin (106, 104).

8. The vehicle structure according to Claim 7, **characterized in that** the core (105) is formed by a plate, said plate being able to comprise openings (107) permitting the passage of the resin (106).

9. A vehicle comprising a structure according to any one of the preceding claims, intended to form the front part or the rear part of the structure of the vehicle.
